# EUROPEAN PATENT SPECIFICATION

(11) **EP 1 096 895 B1**
(45) Date of publication and mention of the grant of the patent: **14.06.2006**
(21) Application number: 99933409.7
(22) Date of filing: 29.06.1999
(51) Int. Cl.: A61C 8/00

(54) **DEVICE FOR A DENTAL PROSTHESIS ARRANGEMENT**
VORRICHTUNG FÜR EINE ZAHNÄRZTLICHE PROTHESE
DISPOSITIF POUR UN SYSTEME DE PROTHESE DENTAIRE

(30) Priority: 10.07.1998 SE 9802495
(43) Date of publication of application: 09.05.2001
(73) Proprietor: Nobel Biocare AB, 402 26 Göteborg (SE)
(72) Inventor: HANSSEN, Halvar, S-423 47 Göteborg (SE)
(74) Representative: Olsson, Gunnar
(86) International application number: PCT/SE1999/001171
(87) International publication number: WO 2000/002495

(56) References cited:
- DE-U- 9 011 663
- US-A- 4 624 673
- US-A- 4 758 161
- US-A- 4 799 886
- US-A- 5 312 255

## Description

### TECHNICAL FIELD

The present invention relates to a device for a dental prosthesis arrangement, which comprises one or more implant(s) and one or more attachment part(s), e.g. one or more spacer (s), one or more bridge(s), parts of spacers or bridges, etc., fitted to the said implant(s) by a joint.

### PRIOR ART

By virtue of American Patent Application 4 645 453, it is previously known to use cemented joints in dental prostheses which comprise an implant and attachment parts. The patent describes, inter alia, the use of a bendable section by means of which the part or parts supporting the dental prosthesis can be angularly orientated in relation to the slant of the implant in the jawbone.

It is also previously known to use an implant with bendable part for its head or upper part. The implant is screwed into the jawbone and in the screwed-in position the bendable part is actuated into the desired vertical extension position in relation to the slanted position of the implant in the jawbone. Reference can here be made, inter alia, to the K.S.I.-Bauer-Screw system sold on the market, which is supplied by "Keramisches Dental-Labor, GmbH/DE".

It is also previously known to use an implant having conical joints, see, for example, US Patent 4 772 204. In this case, the spacing element has a conical section which passes at the bottom into a threaded, cylindrical part. Spacing elements of this type are however not designed to be bent and, because of the threaded part, difficulties arise with the orientation even if bending were to be possible. The spacing elements are therefore impossible to use in combination with angular orientation.

American patent US 4 799 886 discloses an abutment having conical joints and a bendable central portion.

### ACCOUNT OF THE INVENTION

### TECHNICAL PROBLEM

There is a need in dental contexts to be able to use technically simple and unambiguous components (screws, spacers, bridges, sleeves, etc.) which are easy to combine in dental prosthesis attachments and nevertheless give reliable joints which are durable over a long period in the patient. The invention aims to solve this problem, inter alia.

There is also a need to be able to establish temporary dental prosthesis systems which shall be able to be implemented in the jaw or jaws of a patient during the time when patients are undergoing restoration (e.g. extensive restoration) by means of a permanent dental prosthesis system. The invention solves this set of problems also.

According to the inventive idea, use is made of the discovery that so-called Morse cones have a high mechanical wedging effect. There is here a need for the cones in question and corresponding recesses to be arranged such that necessary strong mechanical joints are obtained between the components concerned. In addition, the arrangement shall be such that chewing and biting motions of the patient, and corresponding external effects, reinforce or do not weaken the joint. The invention solves this problem also.

In temporary and permanent dental prosthesis systems, there is a need for those parts in the system which support the dental prosthesis to be able to be arranged and angularly orientated such that a common insertion direction for the dental prosthesis is possible despite the fact that an implant has been arranged at a slant in the jawbone owing to poor condition of the latter. In case of non-parallelism between two or more spacing elements exceeding the cone angle for the second cone, fitting is impossible in practice. The invention is here of the type which uses a bendable section or bendable zone which, under the influence of bending, can be redirected in relation to the implant screw or implant body. It is in this case important that the bending function can be effected outside the jaw of the patient so that the patient's jawbone is not subjected to bending forces which cause discomfort and pain in the patient. Bending of an implant in the patient can lead moreover to the implant breaking loose from its position, especially if it is placed in bone of poor quality, i.e. low-density bone. The invention solves this problem also.

In connection with the exercising of the bending function, the attachment parts connected to the implants (spacers, bridges, sleeves, etc.) shall be able to be angularly orientated such that the respective attachment part acquires the correct position extending in the vertical direction (in the direction of the tooth) despite the fact that the bending function is effected outside the mouth of the patient. The invention solves this problem also and proposes a simple method for assessing (pointing out) the angular position, for effecting the bending outside the mouth and for returning the element having the bent zone such that the previous angularly orientated position is obtained.

It is also important not to need to use cement or glue in the joint, the biocompatible effects of which have not been established in long-term trials. The invention solves this problem also.

### THE SOLUTION

What can primarily be considered to be characteristic of a device for a dental prosthesis arrangement according to the invention is stated in the characterizing portion of claim 1.

### ADVANTAGES

As a result of the above-proposed, the joint for a permanent or temporary dental prosthesis arrangement such as bridges, individual teeth, parts of bridges and teeth, etc., is obtained in simple manner through the use of Morse cones and recesses interacting therewith, and the bendable section provides for a desired levelling function when the implant is arranged at a slant. In the fitting operation, the work of the dentist is substantially simplified by the fact that he/she can simply identify the rotation angle position for the element, which thereafter can be assigned bending forces outside the mouth and reinserted to an adjusted rotation angle position. The bending force can be assigned using a simple, e.g. tubular, tool. Dimensioning of parts of the element can be carried out such that weakening upon bending is minimal, thereby guaranteeing a durably effective joint, the wedging function of which is additionally reinforced with chewing and biting motions of the patient. Conventional joints with threads, screws and untested glue can be eliminated. The effectiveness of the Morse cone is enhanced by the use of material with high friction coefficients in the two joinable parts.

### DESCRIPTION OF FIGURES

A currently proposed embodiment of a device, method and application of the invention shall be described below with simultaneous reference to the appended drawings, in which
- Figure 1: shows in vertical view an embodiment of an element which supports at its ends sections designed as truncated cones and which sections are combined with a section which acts as a bending zone,
- Figure 2: shows in vertical view the element according to Figure 1, but rotated by 90°,
- Figure 3: shows in end view the element according to Figure 1,
- Figure 4: shows in vertical view tubular tool parts applied to the element according to Figure 1, which tool parts are used to impart a bending upon the bending zone of the element,
- Figure 5: shows in vertical view and in basic representation two elements which form part of a mechanical joint between implants screwed into a jaw and attachment part(s) fitted to the implants, and
- Figures 6-6a: show in vertical views and in partial cross section a further embodiment.

### DETAILED EMBODIMENT

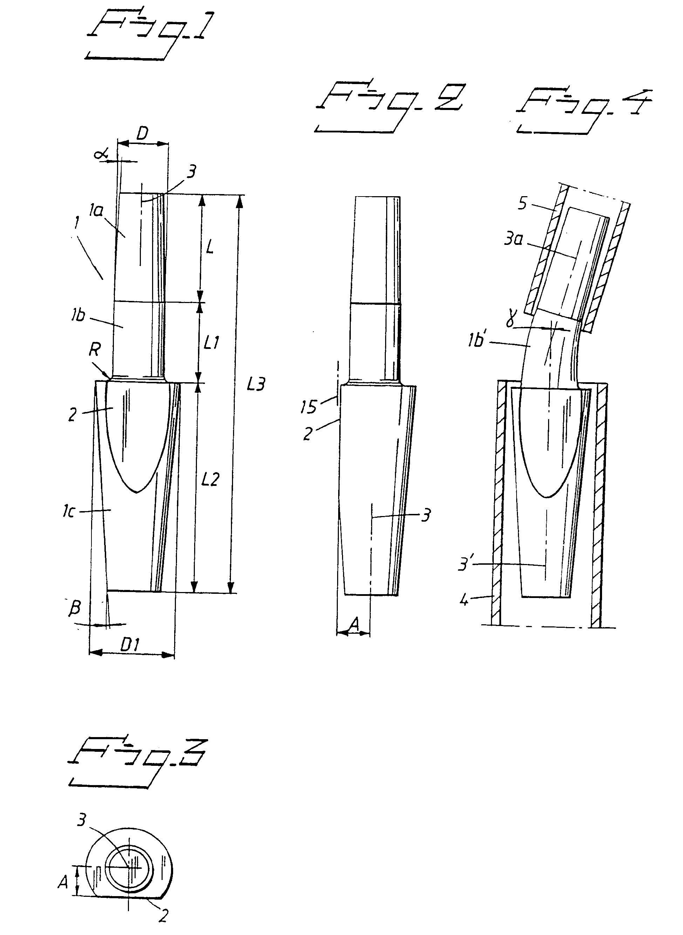

In Figure 1, a device or element according to the invention is denoted by 1. In the illustrative embodiment, the device is designed as a pin or column and has first, second and third sections 1a, 1b and 1c. The first section has the form of a first truncated cone, the half cone angle α of which is in the order of magnitude of 0.75-3°, preferably ca. 1.5°, i.e. the cone angle 2α is 1.5-6°, preferably ca. 3°. At its widest part, the first truncated cone is provided with a diameter of 1.5-2.0 mm, preferably ca. 1.8 mm. The tolerance for the diameter is high and in the present case is chosen at 2/100 mm (0.02 mm). The first truncated cone has a length L of 3-5 mm and is preferably ca. 4 mm.

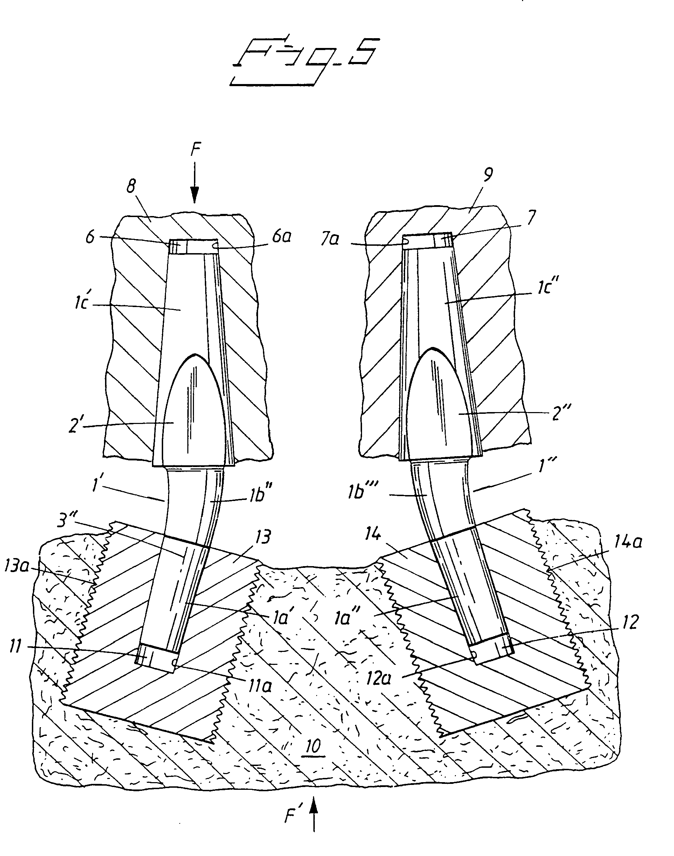

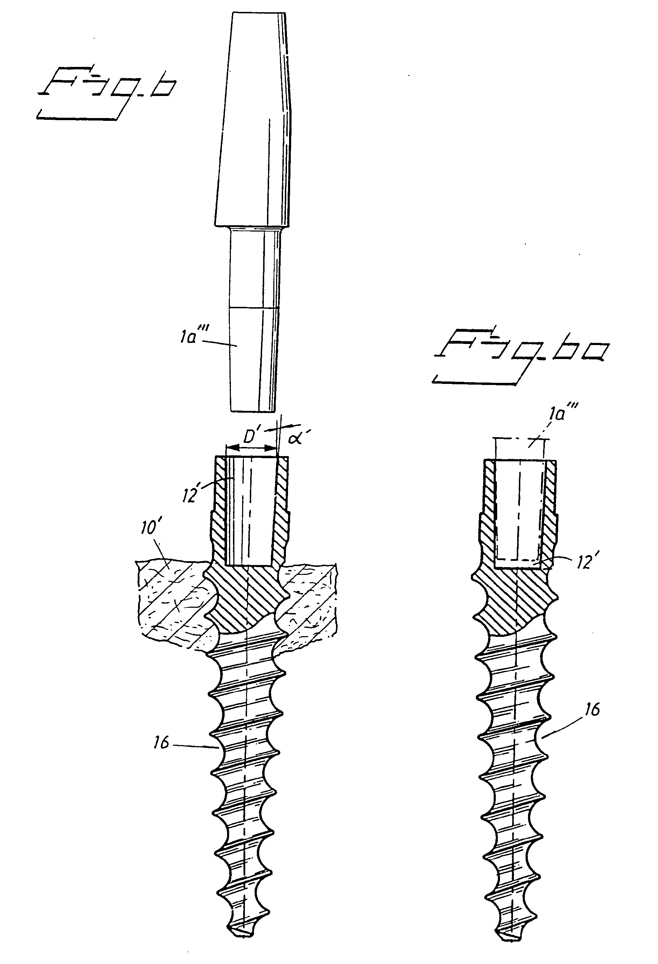

The first section la connects at its widest part to a cylindrical second section 1b, of a diameter which essentially corresponds to the said diameter D and has a length L1 of 2-5 mm, preferably ca. 3 mm. At its end facing away from the section 1a, the cylindrical section 1b passes into the third section 1c via a radius R of 0.1-0.3 mm, preferably ca. 0.2 mm. The third section 1c has the form of a second truncated cone which exhibits a cone angle β of 6-10°C, preferably ca. 8°, and a diameter D1 at its widest point of 2-4 mm, preferably ca. 3 mm, and the tolerance is here too ca. 2/100 mm. The length L2 is 6-10 man, preferably ca. 8 mm.. The section 1c is provided with a straight bevel 2, see also Figures 2 and 3. The surface of the bevel is situated at a distance A from the centre axis 3 of the element. In the illustrated case, the distance is chosen at within the range 1.0-1.4 mm and is preferably 1.2 mm with a tolerance accuracy of 3/100 mm. The total length of the element is preferably ca. 15 mm and the sections are preferably constructed in titanium or equivalent with a friction coefficient of ca. 0.5 mm.

According to Figure 4, the section 1b acts as a bending zone. By means of tubular tool parts 4 and 5, a slant γ between the longitudinal axes 3a and 3' respectively of the sections 1a and 1c can be simply realized. As a result of the cylindrical form of the section 1b, the risks of the element breaking or becoming substantially weakened upon bending and during the subsequent application in the mouth of the patient, are averted.

In Figure 5, two connecting elements 1' and 1'' are bent in their bending zones 1b'' and 1b'" respectively according to Figure 4. The third sections 1c' and 1c' are arranged in the recesses 6 and 7 respectively having conical walls 6a and 7a corresponding to the conical forms of the truncated conical form of the third section 1c' and 1c'' respectively. The recesses 6 and 7 are produced with identical or essentially the same accuracy as the conical form of the first section, so that a high wedging function is present on the part or parts 8, 9 supported by the recesses 6 and 7, a force F generated upon chewing or biting motions, or by external influence, is present relative to a jaw 10 shown in basic representation. The part or parts 8, 9 can comprise a bridge, sleeve, spacer, etc. or parts thereof.

The first sections 1a' and 1a" are arranged in corresponding manner in recesses 11 and 12 respectively having conical walls 11a, 12a, the conical forms of which essentially correspond to the conical form of the respective first section. The accuracy for the conical forms of the recesses is as large or essentially as large as for the respective conical form for the conical form of the first section, so that here too the mechanical wedging force is strong or exceedingly large, since a force F' generated by external influence and/or by chewing or biting motions arises in the jawbone 10 (relative to the force F). In the illustrated case, the other conical recesses 11 and 12 are arranged in implants 13, 14, which can be constituted by a type which is known per se and which are screwed in place by means of threads 13a, 14a in the jawbone 10.

The parts 8, 9 and the implants 13, 14 can be constituted in titanium or corresponding material with a high friction coefficient which can be in the order of magnitude of 0.5. The bevels 2', 2" can form rotation-angle-orientated markings for the dentist or equivalent. In one embodiment, the sections 1a' and 1a" are applied in the recesses 11 and 12 respectively with relatively low friction force F'. Any bending of the zone 1b'' and 1b''' is assessed and the element(s) 1', 1'' is/are removed and bending effected according to Figure 4 or in some other way. The bevels 2' and 2' ' can form part of the angle orientation upon renewed application of the sections 1a' and 1a' ' in the recesses 11 and 12 respectively. Following possible further bending adjustments when the described process is repeated, the sections are pressed tight (wedged) in the recesses 11 and 12 in the rotation positions defined by means of the bevels 2', 2''. The sections 1c' and 1c" thereupon assume essentially parallel directions congruent with the vertical direction of the tooth attachment in question. The attachment part or attachment parts 8, 9 can thereafter be pressed onto the sections 1c, 1c'' by way of their recesses 6 and 7. The effected mechanical wedging can be of temporary or permanent nature. Naturally there are cases in which bending of the bending zone does not need to be carried out, in which case the bending operation is omitted. The bevels 2', 2" can constitute rotation angle fixing in the respective implant 13, 14, the implant being constructed with a surface 15 opposed to the bevel, see line in Figure 2. The cone angles 2α and β can be varied and related, e.g. to the friction coefficient in the respective used material. The respective implant or attachment part can be provided with fixedly arranged elements or columns which, at their free ends, are interactable with a corresponding conical recess or recesses in another attachment part or the implant. Known Morse cones can thus be used as a joint between implant and attachment part or attachment parts, or between attachment parts.

The respective section constructed as a truncated cone can be replaced by another type of conically tapered body and can have the form, for example, of a truncated pyramid, pentagon or hexagon, etc. The slant of the respective implant in Figure 5 is identified by the fact that the longitudinal axis 3' ' for the implant part 1a' in question is angled in relation to the longitudinal axis for the element part 1c'. The parts 1c' and 1c" are arranged such that they are essentially congruent with the direction of insertion of the dental prosthesis or are mutually levelled so that the one element part does not substantially jut above the second element part.

The invention is not limited to the embodiment shown by way of example above but can be subject to modifications within the scope of subsequent patent claims and the inventive concept. Thus, for example, according to Figures 6 and 6a, an implant can be constructed having a conical recess 12' with a half cone angle of corresponding size (e.g. 1.5°) to the cone angle for 1a''' (see Figure 1). A diameter D for the recess 12' falls in line with the size D of the section 1a' ' ' . The angle and diameter measurements are mutually matched with great accuracy (as is the case for Morse cones) so that sought-after wedging forces are attained when the section 1a' ' ' is applied in the recess 12'. The section 1c (see Figure 1) can then interact with an attachment part and the bevel 2 can here be used as rotation angle fixing. A device according to the invention can thus also additionally or separately be characterized in that it has the form of an implant which has a conical recess for connection only by means of cones of an attachment part or equivalent to the implant, which cones wedge mechanically one into the other.

## Claims

1. Device for a dental prosthesis arrangement, which comprises one or more implant(s) (13, 14) and one or more attachment part(s) (8, 9), wherein
- an element (1) formed of a bendable section (1b) has a first (1a) and a second (1c) truncated cone or conically tapered body secured in the respective ends of the bendable section (1b), said element (1) joining the implant (13,14) to the attachment part (8,9) in a first case or two attachment parts together in a second case;
- the components forming the first cone (1a) and the implant (13,14) or attaching part with the recess consist of titanium or other material;
**characterized in that**
- said first cone (1a) is guided or guidable in wedging mechanical interaction with a corresponding recess (11,12) in the attachment part or the implant;
- the titanium or other material has a friction coefficient of 0,2-0,8, preferably ca 0,5, so that said wedging mechanical interaction is effectuated by said friction coefficient in the implant and the attachment part, respectively, as well as by great tolerance accuracy of the truncated cone (1a) or other conically tapered body and the corresponding recess; and
- the first cone (1a) exhibits a cone angle of 2-4°, preferably ca 3°, and/or the second cone (1c) exhibits a cone angle of 6-10°, preferably ca 8°, and
- the implant (13,14) or attachment part supporting the cone being arranged with the bendable section for the achievement of a levelling function in the dental prosthesis arrangement when the implant (13, 14) is arranged at a slant in the bone.

2. Device according to claim 1, **characterized in that** the bendable section (1b) is essentially of uniform thickness in the unbent position and has essentially the same diameter or corresponding measure as the truncated cone or body exhibits at its base or wider end.

3. Device according to claim 2, **characterized in that** the truncated cone or body forms part, together with the bendable section, of a threaded implant.

## Patentansprüche

1. Vorrichtung für eine Zahnprothesenanordnung mit einem oder mehreren Implantat(en) (13, 14) und einem oder mehreren Befestigungsteil(en) (8, 9) wobei
- ein Element (1) aus einem biegbaren Abschnitt (1b) gebildet einen ersten (1a) und einen zweiten (1c) Kegelstumpf oder konisch zulaufenden Körper hat, der in den jeweiligen Enden des biegbaren Abschnittes (1b) befestigt ist, wobei das Element (1) in einem ersten Fall das Implantat (13, 14) mit dem Befestigungsteil (8, 9) verbindet und in einem zweiten Fall zwei Befestigungsteile miteinander verbindet;
- die Bauteile, welche den ersten Konus (1a) und das Implantat (13, 14) oder das Befestigungsteil mit der Aussparung bilden aus Titan oder einem anderen Material bestehen;
***dadurch gekennzeichnet,* dass**
- der erste Konus (1a) mit mechanischer Klemmwirkung in einer entsprechenden Aussparung (11, 12) in dem Befestigungsteil oder Implantat geführt ist oder führbar ist;
- das Titan oder das andere Material einen Reibungskoeffizienten von 0,2 - 0,8, vorzugsweise ca. 0,5 hat, so dass die mechanische Klemmwirkung durch den Reibungskoeffizienten in dem Implantat bzw. dem Befestigungsteil sowie auch durch große Toleranzgenauigkeit des Kegelstumpfes (1a) oder anderen konisch zugespitzten Körpers und der entsprechenden Aussparung bewirkt wird; und
- der erste Konus (1a) einen Konuswinkel von 2 - 4°, vorzugsweise ca. 3° aufweist und/oder der zweite Konus (1c) einen Konuswinkel von 6 - 10°, vorzugsweise ca. 8° auf weist, und
- das Implantat (13, 14) oder das Befestigungsteil, welches den Konus trägt, mit einem biegbaren Abschnitt versehen ist, um in der zahnärztlichen Prothesenanordnung eine Ausrichtfunktion zu erzielen, wenn das Implantat (13, 14) in einer Schräge im Knochen angeordnet ist.

2. Vorrichtung nach Anspruch 1, ***dadurch gekennzeichnet,* dass** der biegbare Abschnitt (1b) in der ungebogenen Position eine im Wesentlichen gleichförmige Dicke hat und im Wesentlichen den gleichen Durchmesser oder das gleiche Maß, wie der Kegelstumpf oder abgeschnittene Körper an seiner Basis oder an seinem breiteren Ende aufweist, hat.

3. Vorrichtung nach Anspruch 2, ***dadurch gekennzeichnet,* dass** der Kegelstumpf oder abgeschnittene Körper zusammen mit dem biegbaren Abschnitt einen Teil des mit einem Gewinde versehenen Implantats bildet.

## Revendications

1. Dispositif pour système de prothèse dentaire, qui comprend un ou plusieurs implant (s) (13, 14) et une ou plusieurs pièce(s) de fixation (8, 9), dans lequel
- un élément (1) formé d'une section pliable (1b) ayant un premier (1a) et un second (1b) cône tronqué ou corps coniquement aminci fixé dans les extrémités respectives de la section pliable (1b), ledit élément (1) raccordant l'implant (13, 14) à la pièce de fixation (8, 9) dans un premier cas ou deux pièces de fixation l'une à l'autre dans un second cas ;
- les composants formant le premier cône (1a) et l'implant (13, 14) ou la pièce de fixation avec l'évidement étant constitués de titane ou d'un autre matériau ; **caractérisé en ce que**
- ledit premier cône (1a) est guidé ou guidable en interaction mécanique de calage avec un évidement correspondant (11, 12) dans la pièce de fixation ou l'implant ;
- le titane ou autre matériau a un coefficient de frottement de 0,2 à 0,8, de préférence d'environ 0,5, de telle sorte que ladite interaction mécanique de calage soit effectuée par ledit coefficient de frottement dans l'implant et la pièce de fixation, respectivement, ainsi que par une grande précision de tolérance du cône tronqué (1a) ou autre corps coniquement aminci et de l'évidement correspondant ; et
- le premier cône (1a) présente un angle au sommet du cône de 2 à 4°, de préférence d'environ 3° et/ou le second cône (1c) présente un angle au sommet du cône de 6 à 10°, de préférence d'environ 8° ; et
- l'implant (13, 14) ou la pièce de fixation supportant le cône étant agencé(e) avec la section pliable pour obtenir une fonction de réglage dans le système de prothèse dentaire lorsque l'implant (13, 14) est agencé à l'oblique dans l'os.

2. Dispositif selon la revendication 1, **caractérisé en ce que** la section pliable (1b) a essentiellement une épaisseur uniforme dans la position non pliée et a essentiellement le même diamètre ou mesure correspondante que le cône tronqué ou corps présente à sa base ou à son extrémité élargie.

3. Dispositif selon la revendication 2, **caractérisé en ce que** le cône tronqué ou corps fait partie, conjointement avec la section pliable, d'un implant fileté.
